# EUROPEAN PATENT APPLICATION

(11) **EP 3 113 521 A1**
(43) Date of publication of application: **04.01.2017**
(21) Application number: 15306062.9
(22) Date of filing: 01.07.2015
(51) Int. Cl.: H04W 4/00, H04W 48/00, H04W 88/16, H04W 28/08

(54) **APPARATUS AND METHOD OF ADAPTIVELY CONNECTING DEVICES IN A NETWORK WITH GATEWAYS COUPLED TO EXTERNAL NETWORKS**

(71) Applicant: Thomson Licensing, 92130 Issy-les-Moulineaux (FR)
(72) Inventor: ONNO, Stéphane, 35576 Cesson-Sévigné (FR); LEGUILLON, Valérie, 35576 Cesson-Sévigné (FR); GUEGANT, Jean, 35708 Rennes Cedex 7 (FR)
(74) Representative: Huchet, Anne

(57) **Abstract**

An apparatus (20) adaptively connecting devices (110, 120) in a network with gateways (310, 320, 330) coupled to external networks is provided. The apparatus includes a switch (220) for connecting one of the devices with one of the gateways, and a controller (205) for controlling the switch so as to identify the one of the gateways for the one of the devices by using a routing algorithm, the routing algorithm being dynamically determined based on information of the apparatus or received from the devices or the gateways.

## Description

### FIELD

The present disclosure generally relates to an apparatus and a method for connecting devices in a network with gateways.

### BACKGROUND

The number of connected Consumer Electronics (CE) devices in residential home networks increases drastically and the average number in 2013 was about seven devices (see "http://www.digitaltvnews.net/?p=23908") per household. Furthermore, it is likely that part of the CE devices have mobile UMTS or LTE Internet accesses with sometimes unlimited data plans. When arriving at home, users often connect to a wireless access point with their mobile devices, thus they do not use the spare capacities of their mobile accesses. In a household where several members own their mobile phones, a huge amount of bandwidth is unused and a fortiori, for those having LTE mobile subscriptions.

### SUMMARY

According to one aspect of the present disclosure, an apparatus adaptively connecting devices in a network with gateways coupled to external networks is provided. The apparatus includes switch means for connecting one of the devices with one of the gateways; and control means for controlling the switch means so as to identify the one of the gateways for the one of the devices by using a routing algorithm, the routing algorithm being determined based on information of the apparatus or received from the devices or the gateways.

Other objects, features and advantages of the present disclosure will become more apparent from the following detailed description when read in conjunction with the accompanying drawings.

### BRIEF DESCRIPTION OF THE DRAWINGS

FIG. 1 illustrates one example of an embodiment of a system of the present disclosure;
FIG. 2 illustrates one example of a functional configuration of the embodiment of the present disclosure;
FIG. 3 illustrates one example of a functional configuration of a virtual gateway application in the embodiment of the present disclosure;
FIG. 4 illustrates one example of a functional configuration of an OpenFlow switch in the embodiment of the present disclosure;
FIG. 5 illustrates one example of a functional configuration of a gateway function in the embodiment of the present disclosure;
FIG. 6 illustrates one example of a functional configuration of a device function in the embodiment of the present disclosure;
FIG. 7 illustrates one example of a hardware configuration of each apparatus/device included in the embodiment;
FIG. 8 illustrates one example of sequential operations according to the embodiment of the present disclosure;
FIG. 9 illustrates one example of a flow of operations according to the embodiment of the present disclosure;
FIG. 10 illustrates one example of routing operations according to the embodiment of the present disclosure;
FIG. 11 illustrates one example of OpenFlow tables in the OpenFlow switch used in the routing operations according the embodiment of the present disclosure;
FIG. 12 illustrates one example of tables used by a routing algorithm according the embodiment of the present disclosure;
FIG. 13 illustrates one example of a variant of the embodiment of the present disclosure; and
FIG. 14 illustrates an exemplary screen shot of an alternative implemented in the embodiment of the present disclosure.

It should be understood that the drawings are for purposes of illustrating the concepts of the disclosure and is not necessarily the only possible configuration for illustrating the disclosure.

### DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "module" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

According to an embodiment, it is possible to cleverly manage whole access links to the Internet at home for increasing the overall Quality Of Experience (QOE) for a family. According to the embodiment, it is possible to extend this idea to nomadic networks where a set of devices share and provide their Internet accesses inside the same network. The following household use cases illustrates what can be done according to the embodiment or its variant:
- If both dad's device and son's device are connected in a home network and two Internet access links are available, the son's device traffic will flow to a mobile Internet access to use the full broadband bandwidth of dad.
- If the son's device is used for gaming while the dad's device is used for streaming, the son's device traffic will flow to one of the Internet access links with a lower latency while the dad's device traffic will flow to another of the Internet access links providing a higher bandwidth.
- A UMTS mobile phone used for streaming traffic can be redirected to a LTE mobile phone access link and conversely, i.e., LTE mobile Web traffic can be redirected to a UMTS mobile access link.
- If the whole family is watching Netflix (registered trade mark) with a high definition rate, a controller balances and makes use of all the broadband and the mobile access links to provide the best QOE.

Therefore, there is a need for a seamless use of multiple WAN accesses people have paid for.

"OpenFlow" (from the OpenFlow specification) will now be described.

An OpenFlow switch includes one or more flow tables and a group table, which perform packet lookups and forwarding, and an OpenFlow channel to an OpenFlow controller. The OpenFlow switch communicates with the OpenFlow controller and the OpenFlow controller manages the OpenFlow switch via an OpenFlow protocol. Using the OpenFlow protocol, the OpenFlow controller can add, update, and delete flow entries in the flow tables, both reactively (in response to packets) and proactively. Each flow table in the OpenFlow switch contains a set of flow entries. Each flow entry includes match fields, counters, and a set of instructions to apply to matching packets.

In the related art, there may be several ways to make use of multiple WAN accesses at home or in general, as follows:
- "Bonding" stands for various methods for combining multiple access networks from a single point, this for increasing throughput, load balancing or providing a fall back access link. An example is a "multipathnetwork" device (see "http://www.multipathnetworks.com/"). A bonding server on a cloud aggregates all the traffic coming from respective client interfaces of a given home or an office network. On the network, a single point of decision multiplexes packets toward the client interface through an available WAN access link. The traffic is sent over VPN connections to reach a server which aggregates the traffic and sends it on the Internet afterward.
- A "load-balanced router" is such that a multi WAN can be based on a static router configuration of rules, tables and routes with Iproute2 and nexthop, for example. Mwan3 (see "http://wiki.openwrt.org/doc/howto/mwan3") allows achieving load balanced traffic based on numeric weight assignment. A user interface allows setting a load balancing policy such as WAN priority or user rules matching a MAC address, for instance.

However, the "bonding" needs an external server often in a cloud to aggregate traffic. The "multipathnetwork" solution requires a cloud subscription to aggregate traffic. Latency issues and VPN overhead may also be main drawbacks of such a kind of solution. On the other hand, it provides full internet access aggregation.

The "load-balanced router" is based on a static configuration and as such does not provide a dynamic modification of routes depending on network events. It may only provide a coarse-grained policy that does not make possible complex routing decisions. It may be not easy to add a mobile device with Internet capabilities and there is no alternate route for a device to bring Internet access thereto.

There are also practical reasons leading to additional technical challenges to meet with a mobile gateway, as follows.
- A mobile phone is preferably connected wirelessly while it provides an access to the Internet although a wired connection (e.g. USB). This implies a seamless connection which is not straightforward with the current state of the art.
- In order to provide an access for other devices, a mobile phone is to be able to connect to a network and optionally use another Internet route other than its own. This is not supported with the state of the art.
- Mobile connectivity goes with numerous challenges, as follows: i) The connection can be up and down at each instant; and ii) the bandwidth can vary depending on a received signal strength and the location of a mobile device. These considerations imply acquiring additional dynamic information from gateways and making dynamic routing decisions.

A main problem to solve is to mediate all Internet access requests from LAN devices according to high level routing rules to route each request to an existing access link. A solution will provide a seamless and dynamic way to add or remove additional mobile gateways, i.e., mobile access capabilities.

A basic assumption for the embodiment is to use Software-Defined Networking (SDN) (e.g. OpenFlow) to enable the control of an OpenFlow switch from high level applications. SDN/OpenFlow can enable fine-grain packet forwarding decisions thanks to powerful abstraction of "network programming".

When connecting to a LAN, each device is usually assigned an IP address of its default gateway to access the Internet. Usually, a DHCP function sends this default gateway address together with the IP address assigned for the device. For a static configuration, it is up to a user to set the default gateway.

Turning now to the FIGs. It should be noted that similar or the same elements are referenced with the same reference numbers.

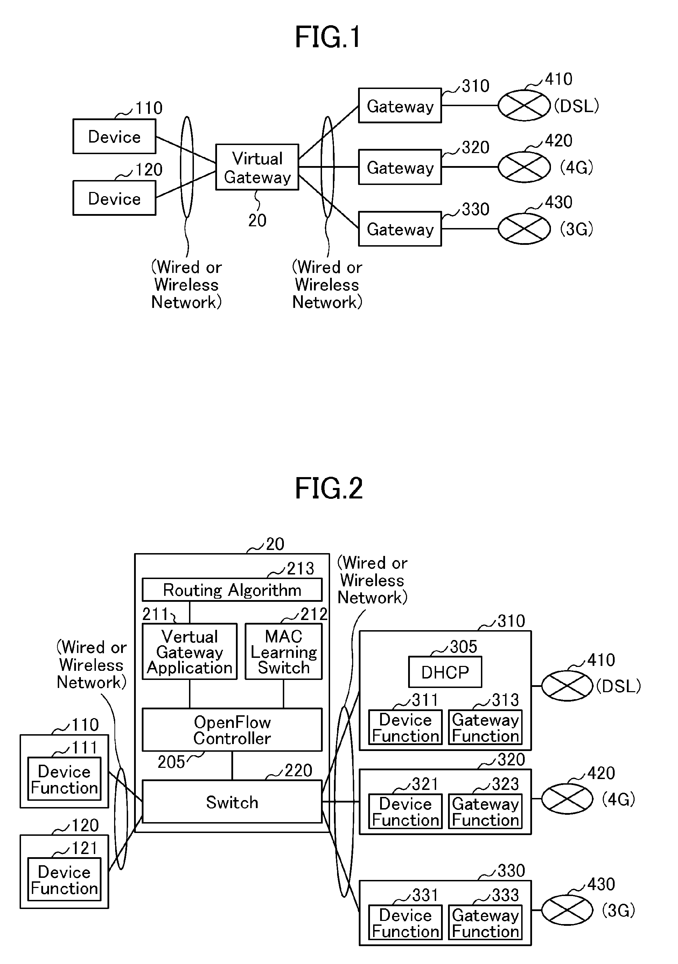

FIG. 1 illustrates a virtual gateway (VG) 20 having a LAN interface and including a virtual gateway application 211, an OpenFlow controller 205 and an OpenFlow switch 220 (see FIG. 2). The virtual gateway 20 is used as a default gateway for each of devices 110, 120, 310, 320 and 330 in a network. Note that the OpenFlow switch 220 can be implemented also in an apparatus/device other than an apparatus/device in which the virtual gateway application 211 and the OpenFlow controller 205 are implemented.

The virtual gateway 20 mediates all default gateway requests, i.e., an Internet access from each device in the network and computes a routing decision with respect to a high level user defined or Machine Learning (ML) rules. As a result, the virtual gateway 20 (actually, the virtual gateway application 211, described later) generates and transmits corresponding flow rules ("flow entries") to the switch 220. The rules include at least a "matching header" (e.g. an IP destination, a MAC source and/or the like) and a set of actions (e.g. transmitting a packet to a DSL gateway 310 or a mobile gateway 320/330, changing a destination of a packet, and/or the like). Each subsequent device request that matches a given rule will be automatically redirected to the corresponding network gateway (implemented in respective access link devices 310, 320 or 330). The access link device (i.e., the network gateway) then accesses the corresponding access network 410, 420 or 430.

FIG. 2 illustrates the system of FIG. 1 in further detail.

As shown in FIG. 2, the virtual gateway 20 includes the OpenFlow controller 205, the OpenFlow switch 220, the virtual gateway application 211, a MAC learning switch 212 and a routing algorithm 213.

A DHCP function 305 can be implemented in the access link device 310, for example, and is configured to transmit the IP address of the virtual gateway 20 as a default gateway IP address for any of the devices 110, 120, 310, 320 and 330 (more specifically, device functions 111, 121, 311, 321 and 331).

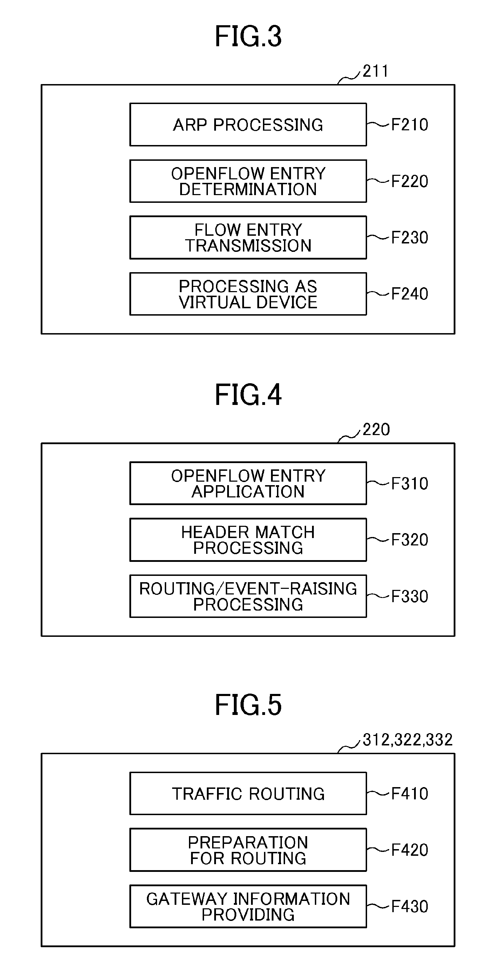

The virtual gateway application 211 has, as shown in FIG. 3, a number of functions. A function F210 of hooking an ARP request from each of the device functions 111, 121, 311, 321 and 331 for the IP address of the virtual gateway 20. A function F220 of applying given user defined rules or ML rules (or policy) into OpenFlow entries (i.e., "flow entries"). A function F230 of sending the flow entries to the switch 220. A function F240 of behaving as a virtual device such as replying to a ping request or acquiring access link device (i.e., the access link devices 310, 320 and 330) capabilities.

The OpenFlow switch 220 has, as shown in FIG. 4, a number of functions. A function F310 of applying the given flow entries to its flow tables. A function F320 of determining a match between the header of given traffic (a packet or so) and its flow entries. A function of, if matching, routing the packet or so on a corresponding interface meaning the corresponding access link device 310, 320 or 330 otherwise raising an event to the virtual gateway 20 (more specifically, the routing algorithm 213 described later).

Each of the gateway functions 313, 323 and 333 implemented in the corresponding access link devices 310, 320 and 330 has, as shown in FIG. 5, a number of functions. A function F410 of routing incoming traffic (packet or so) from the switch 220 to the Internet (via the corresponding access network 410, 420 or 430) and vice versa. A function F420 of configuring access network rules, tables and routes, NAT, firewall and/or the like. A function F430 of optionally transmitting its gateway information such as capabilities and/or a liveliness message to the virtual gateway application 211.

The gateway information can include identification information (for example, a device type such as "broadband" or "mobile"), the operator's name, the device name, the IP address, etc., the network indicator (for example, "Edge", "3G", "4G" or so) and/or the signal strength to the virtual gateway 20, a liveness message such as a ping, and/or any dynamic information relevant for the virtual gateway application 211.

Optionally, the function F430 can provide a way for the virtual gateway application 211 to also directly poll the gateway information.

Each of the device functions 111, 121, 311, 321 and 331 represents the behavior of the corresponding one of the devices 110 and 120, and the access link devices 310, 320 and 330 in the network (i.e., a Local Area Network (LAN) or the like established in a corresponding home or the like) to which the device is connected together with the switch 220.

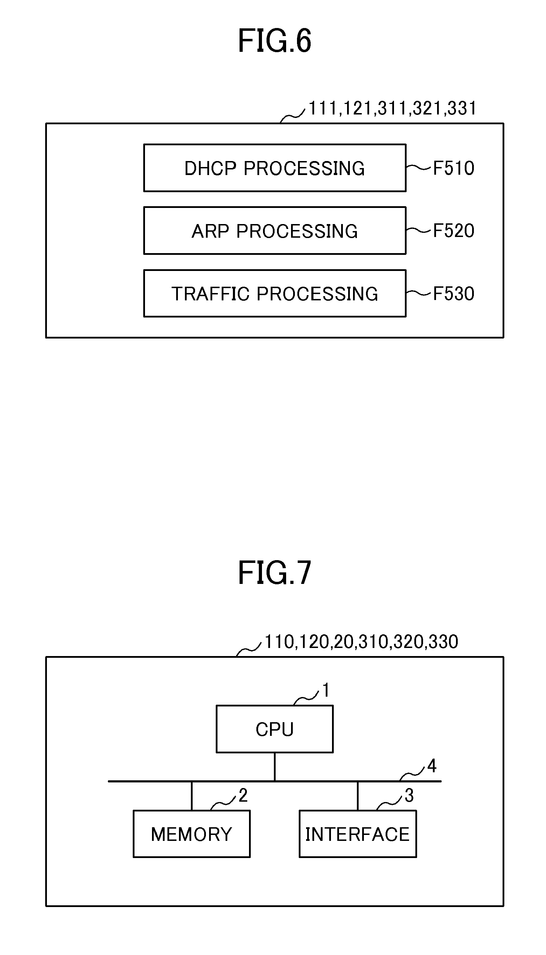

Each of the device functions 111, 121, 311, 321 and 331 is managed by the OpenFlow switch 220, and, as shown in FIG. 6, has a number of functions. A function F510 of acquiring the IP address of the virtual gateway 20 from the DHCP function 305 or that is statically set inside. A function F520 of acquiring the Media Access Control (MAC) address of the virtual gateway 20 according to Address Resolution Protocol (ARP). A function F530 of transmitting or receiving traffic (packet or so) through the OpenFlow switch 220 seamlessly. The device function does not know which Internet route (DSL, 4G or 3G, for example) will be designated thereto dynamically.

FIG. 7 illustrates one example of a hardware configuration of each apparatus/device, i.e., each of the respective devices 110 and 120, the virtual gateway 20, and the respective access link devices 310-330. Each of the respective devices 110 and 120, the virtual gateway 20, and the respective access link devices 310-330 can be any type of an information processing apparatus/device such as a mobile phone/cellular phone, a personal digital assistant (PDA), a personal computer, or the like. On the other hand, each of the access link devices 310-330 can be any type of an information processing apparatus/device such as a router, a mobile phone/cellular phone, a personal digital assistant, a personal computer, or the like.

As shown in FIG. 7, each of the respective devices 110 and 120, the virtual gateway 20, and the respective access link devices 310-330 can include a Central Processing Unit (CPU) 1, a memory 2 and an interface 3, connected together via a bus 4. The above-mentioned DHCP function 305 and the respective functions described above in FIGs. 3-6 can be implemented by computer-readable programs stored in the memory 2 as a result of the programs being executed by the CPU 1. Thus, the respective functions of the virtual gateway application 211 can be implemented as a result of the virtual gateway application 211 stored in the memory 2 of the virtual gateway 20 being executed by the CPU 1 of the virtual gateway 20. The interfaces 3 are used to communicate between the respective devices 110 and 120, the virtual gateway 20, and the respective access link devices 310-330 via the wired or wireless network.

In particular, beside its elementary functions, a given device may embed several functions, especially for Consumer Electronics (CE).

The OpenFlow switch 220 can be implemented in a form of software running on a device dedicated for networking such as a home router or running on a device having enough network capabilities such as a mobile phone. The most well-known software switch may be, for example, "OpenVSwitch" (e.g., see "http://openvswitch.org/") and "OpenSoftSwitch" (e.g., see "http://www.sdncentral.com/projects/cpqd-ofsoftswitch/"). Alternatively, pure OpenFlow hardware can also be used as the switch 220.

The gateway function 313, 323 or 333 can be provided by a home router or by a mobile device (a mobile phone, a PDA, or the like). The access link device 310, 320 or 330 interfaces a broadband network with a DSL or cable modem 3 or a mobile network with a UMTS/LTE modem 3. A broadband router, a mobile phone, a mobile tablet or a Mi-Fi (Mobile Wifi) device or even an in-car router can embed the gateway function 313, 323 or 333. A gateway application detailed below performs the corresponding gateway function 313, 323 or 333. A CE device acting as the access link device such as a mobile phone can embed the device function 311, 321 or 331 and the gateway function 313, 323 or 333. A broadband router can embed the function of the switch 220, the gateway function 313, 323 or 333, the device function 311, 321 or 331 and even the DHCP function 305. A so-called "hybrid switch" has an OpenFlow traffic forwarding function, and thus, can include the function of the switch 220, and a NORMAL non-OpenFlow traffic forwarding function, and thus, can include the gateway function. In that case, a particular OFP_NORMAL request may be implemented to forward packets from the switch 220 to the access link device 310, 320 or 330.

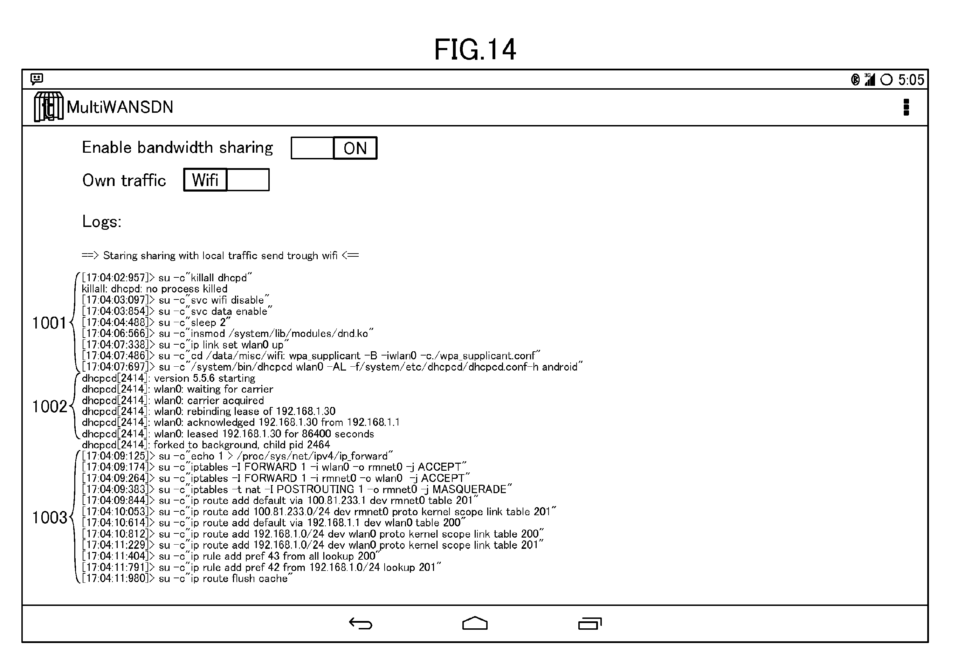

The gateway application (see a screenshot shown in FIG. 14, for example) can provide glue logic to connect the function of the switch 220 seamlessly and to perform its gateway function 313, 323 or 333 to share the bandwidth between the access link devices 310, 320 and 330. According to the embodiment, an Android (registered trademark) application can be designed for a mobile phone. Basically, a user can choose whether he or she shares or doesn't share the mobile phone's access network. The user can also decide whether or not he or she owns its Internet traffic meaning that its traffic will always flow through its access network. Otherwise, Internet traffic can flow to the switch 220 and the switch 220 will manage its Internet traffic like any device inside the network. In that case, the switch 220 can decide to forward traffic on another access network such as the broadband network 410. When set up, the gateway application connects to a default wireless access point of the switch 220 and enables the mobile access network 420 or 430. The mobile phone is to be the root since the default Android (registered trademark) application behavior does not allow running both wireless and mobile networks together. When both interface links are up, the gateway application performs the gateway function using IPtables, IP routes and IP rules to set up forwarding rules, tables and routes accordingly. The gateway application also communicates with the virtual gateway application 211 to provide its static capabilities useful for its identification such as the user name, the mobile type, the mobile name, the operating system and so forth. The gateway application can also regularly send its liveliness message such as a ping as well as a network indicator ("Edge", "3G", or "4G", for example), the signal strength, and/or the like. Conversely, the virtual gateway application 211 can also poll the same information from the gateway application when required. It is a straightforward way to determine the currently available access links. The access link device 310, 320 or 330 can passively or dynamically check the available bandwidth. A similar application or configuration can also be applied on a broadband router or the like.

Next, the virtual gateway application 211 will be described in detail.

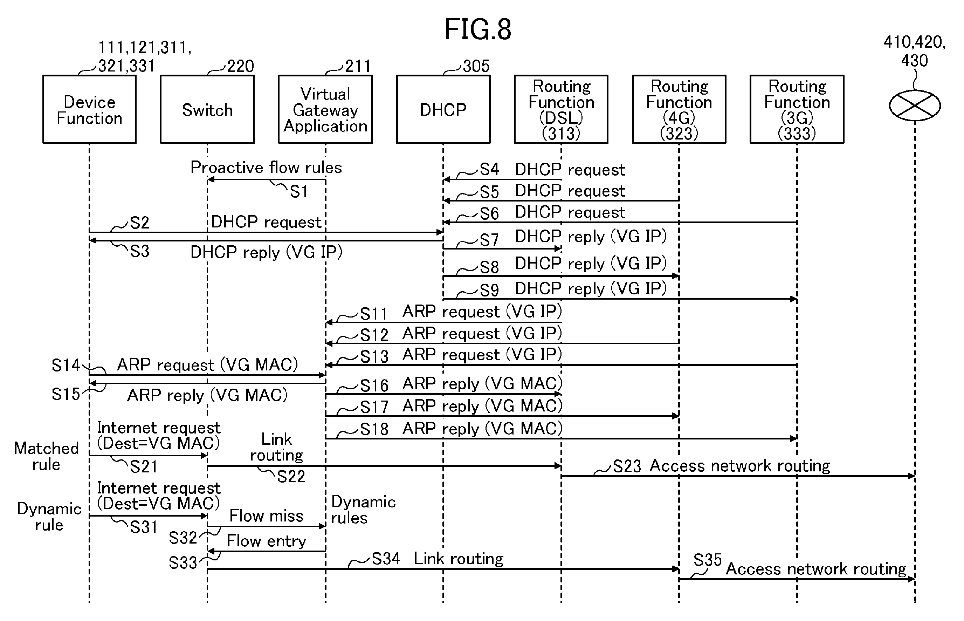

The virtual gateway application 211 acts as a default gateway to control the OpenFlow switch 220 that will mediate all Internet accesses from each of the device functions 111, 121, 311, 321 and 331. The virtual gateway application 211 computes routing decisions based on users' requests (user defined rules) and/or ML rules with respect to the available access links (corresponding to the respective access link devices 310, 320 and 330) and their current capabilities. As a result, the virtual gateway application 211 generates a set of flow entries and transmits the flow entries for implementing particular routing decisions to the switch 220 (in step S1 in FIG. 8, for example) which applies them to forwarding tables afterwards.

FIG. 8 illustrates how the virtual gateway application 211 interacts with the other functions mentioned above.

As shown in FIG. 8, the device function 111, 121, 311, 321 or 331 transmits a DHCP request to the DHCP function 305 (in step S2) which then returns a DHCP reply to the device (in step S3) with the IP address of the virtual gateway 20 (including the virtual gateway application 211) as a default gateway. Note that the MAC address and the IP address of the virtual gateway 20 can be set by a user, for example.

Similarly, the access link devices 310-330 (more specifically, corresponding routing functions of the respective gateway functions 313-333) transmit DHCP requests to the DHCP function 305 (in steps S4-S6) which then returns DHCP replies thereto (in steps S7-S9) with the IP address of the virtual gateway 20 as a default gateway.

When the device function 111, 121, 311, 321 or 331 sends out a first packet with its default route, the device function issues an ARP request with the IP address of the virtual gateway 20. The virtual gateway application 211 acquires the request (in step S14) and generates and returns an ARP reply with the MAC address of the virtual gateway 20 (in step S15). Note that the above-mentioned step S1 can also be carried out after step S15 to send a flow entry implementing a particular routing decision for the device function.

The routing functions of the respective gateway functions 313-333 issue ARP requests with the IP address of the virtual gateway 20. The virtual gateway application 211 acquires the requests (in steps S 11-S 13) and generates and returns ARP replies with the MAC address of the virtual gateway 20 (in steps S16-S18).

Then, most of the device traffic will flow from the device function 111, 121, 311, 321 or 331 to the switch 220 (in step S21) and then to the access network 410, 420 or 430 via the corresponding access link device 310, 320 or 330 (in steps S22-S23).

The switch 220 can modify the flow upon a flow modification request from the virtual gateway application 211 or routinely delete the flow when a flow timeout has expired. When a new packet arrives after the expiration (in step S31), a flow miss occurs inside the switch 220 and the switch 220 raises an event to the virtual gateway application 211 (in step S32) to proceed to a routing decision again. According to the routing decision, the virtual gateway application 211 transmits a corresponding flow entry to the switch 220 (in step S33) which then transmits the packet to the corresponding one of the access networks 410, 420 and 430 via the corresponding access link device 310, 320 or 330, accordingly (in steps S34-S35). The routing decision is computed according to the routing algorithm 213 based on ML rules, user defined rules and/or the like. The routing algorithm 213 can be implemented in a form of a data file.

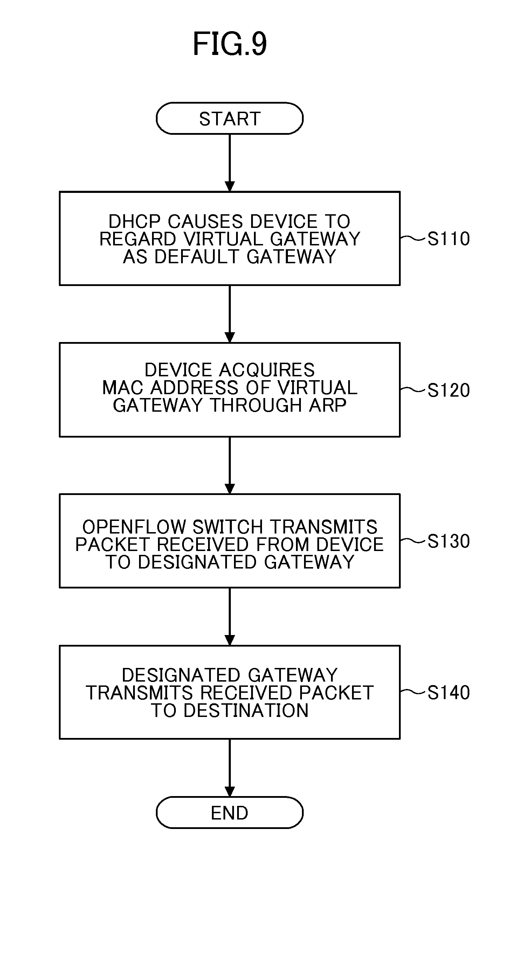

FIG. 9 illustrates one example of a flow of operations in the embodiment.

As shown in FIG. 9, in step S110, the DHCP function 305 causes each of the device functions 111, 121,311,321 and 331 to regard the virtual gateway 20 as a default gateway.

In step S120, each of the device functions 111, 121, 311, 321 and 331 acquires the MAC address of the virtual gateway 20 through the ARP scheme.

In step S130, the OpenFlow switch 220 transmits a packet received from each of the device functions 111, 121, 311, 321 and 331 to a designated access link device 310, 320 or 330 for a corresponding access network 410, 420 or 430 according to the flow table, the contents (flow entries) of which are dynamically determined by the virtual gateway application 211 according to the routing algorithm 213 based on the ML rules and/or the users' requests.

In step S140, the designated access link device transmits the packet to the destination via the access network.

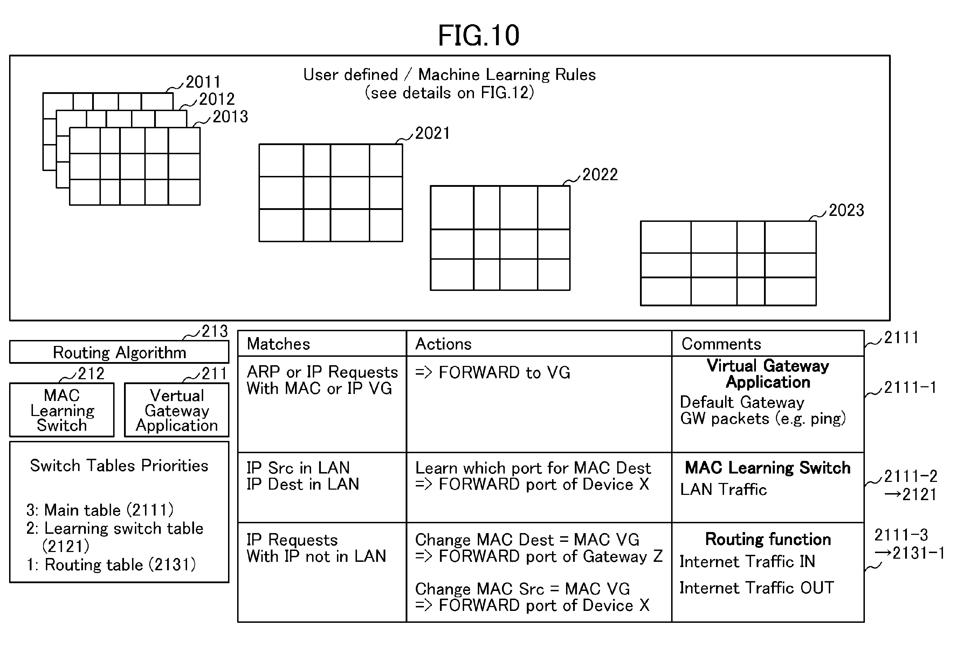

FIG. 10 illustrates how the virtual gateway application 211 works together with the MAC learning switch 212 to enable routing operations in the virtual gateway application 211.

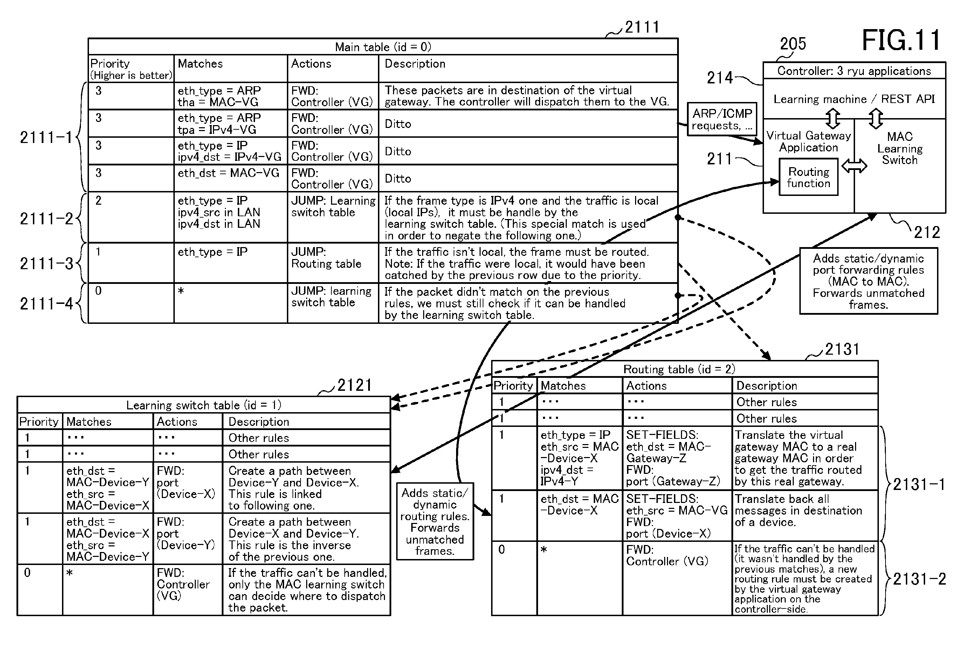

FIG. 11 illustrates one example of OpenFlow tables in the OpenFlow switch 220 used for the routing operations according to the embodiment.

As shown in FIG. 11, according to the embodiment, the virtual gateway application 211 works together with the MAC learning switch 212 carrying out traffic switching operations based on a learning switch table 2121 and a learning machine/REST API 214 carrying out MAC learning operations and providing an interface for the OpenFlow controller 205. The MAC learning switch 212 and the learning machine/REST API 214 can be implemented in a form of application software, for example.

Basically, when a packet arrives, the switch 220 evaluates the flow tables 2111, 2121 and 2131.

As shown in FIG. 10, the first field 2111-1 of a Main table 2111 (also see FIG. 11) is for virtual gateway traffic such as ARP requests from the device functions 111, 121, 311, 321 and 331 or the gateway functions 313, 323 and 333.

Then, traffic coming from the LAN (see the second field 2111-2) takes precedence against Internet traffic (see the third field 2111-3).

Depending on matching, jumping to a learning switch table 2121 occurs (see the field 2111-4).

For an Internet request, the switch 220 tries to match it with a routing table 2131 shown in FIG. 11, i.e., IP addresses or the like (see the fields 2131-1), otherwise the routing algorithm 213 is called to set a new flow entry in the routing table 2131 (see the field 2131-2).

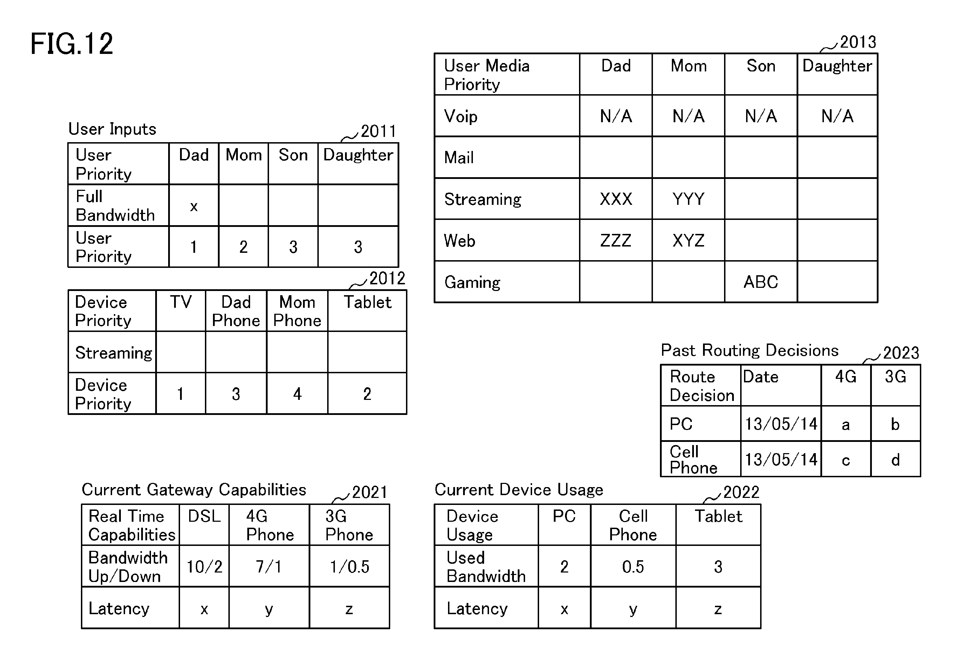

FIG. 12 depicts a collection of information that can be used for the routing algorithm 213. It can be a composition of user defined rules 2011, 2012 and 2013, current device usage 2022, real time gateway capabilities 2021 and even past routing decisions 2023, as follows:
In the user defined rules (i.e., user usage requirements) (2011, 2012, 2013), the user can set simple priorities for the device functions 111, 121, 311, 321 and 331 (i.e., a TV vs. a tablet, for example), application (streaming vs. Web, for example), the users (dad vs. son, for example) and a list of services (Google (registered trademark), Netflix (registered trademark), and/or the like). A network programming model makes possible an enhanced semantic usage expression such as "dad gets the full broadband bandwidth if his son is connecting and another access link is available".

As mentioned above, the virtual gateway application 211 can acquire or poll the current gateway capabilities such as the liveliness, the available bandwidth, latency metrics, and/or the like, as the real time gateway capabilities 2021.

The current device usage 2022, the current bandwidth and the corresponding application type used by each access link device is useful in modifying the device priority among the access link devices 310-330 to access the Internet. OpenFlow Meter Tables provide a fine-grain status of flow statistics and tools to cap the bandwidth as well.

The past routing decisions 2023 are useful to predict a modification of the ongoing network capabilities and to proactively set a bunch of routes. For instance, if dad usually returns home at 6:30 and puts his mobile phone on his desk, it is highly probable that a new gateway will appear and that routing priorities will change accordingly. A few minutes before, the routing algorithm 213 can decide to provide new flow entries accordingly.

The routing algorithm 213 can be powerful since it is a dynamic network program implemented in high level language ("python", "java" or the like) and even possibly a functional language rather than low level static rules or tables. It enables a complex algorithm decision such as "If dad arrives home with his mobile device, and son is gaming, the traffic of son will be redirected to the mobile gateway to provide the full broadband bandwidth of dad to son".

Note that all of the rules can be set from an application (in "java", "python", or the like) via the OpenFlow controller 205 and the OpenFlow protocol. For example, when a user accesses the virtual gateway application 211 from his or her device function 111, 121, 311, 321 or 331 with the corresponding MAC address, the virtual gateway application 211 identifies the user from the MAC address, and computes a set of flow rules for that particular device. For example, when acquiring the MAC address belonging to dad, the virtual gateway application 211 can dynamically set such rules as to forward all the traffic of dad to the access link device 310 for a DSL, for example, with the highest priority.

The virtual gateway application 211 can interface with the API of the OpenFlow controller 205 which can interface with the switch 220 via OpenFlow. The virtual gateway application 211 can acquire packets from the OpenFlow controller 205 and modify the packets, and the virtual gateway application 211 transmits flow rules with matching headers and corresponding actions to the OpenFlow controller 205.

According to the embodiment, it is possible to acquire any packet, and therefore, any information as is necessary in the software application. Because the software application controls the rules to be transmitted to the switch 220, it is possible to dynamically change or update the rules concerning the forwarding elements (i.e., bridges, routers, SDNs, programmable forwarding elements and/or the like).

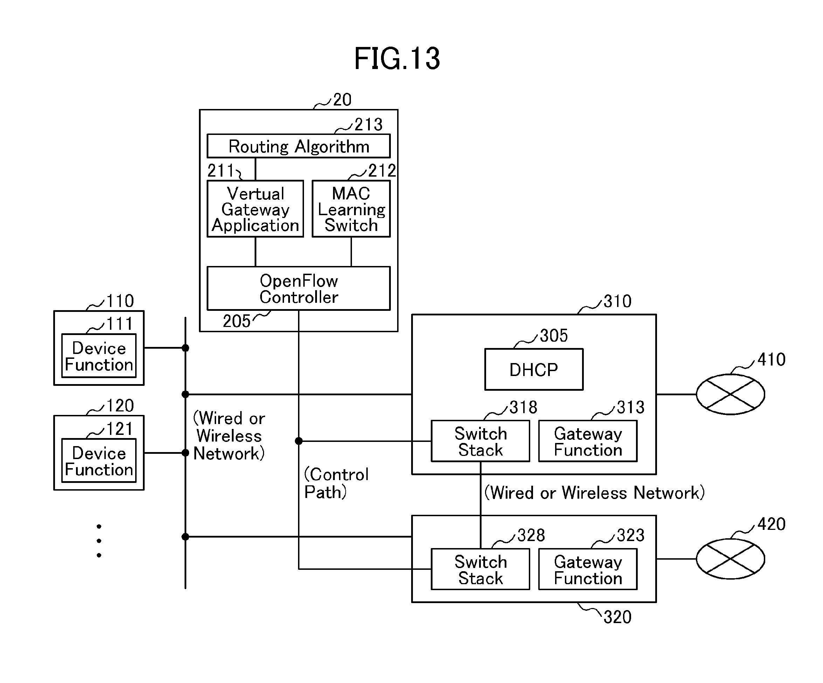

Concerning a variant of the embodiment, multiple OpenFlow switches and advanced setup will now be described using FIG. 13.

The virtual gateway application 211 can control multiple OpenFlow switches in switch stacks 318 and 328. In such a case, the OpenFlow controller 205 communicates with and controls each OpenFlow switch in the switch stacks 318 or 328. FIG. 13 depicts an example of two access link devices 310 and 320 each running the OpenFlow switches. The above-mentioned routing algorithm 213 can set different flow entries for each switch to enable more fine-grain routing decisions. For example, if a decision relies on routing local traffic of the mobile device 320 to its gateway, the routing algorithm 213 can set a flow entry on the switch (in the switch stack 328) of the mobile device 320 to match Internet traffic towards its mobile access network 420. To that end, the traffic will flow directly and avoid a round trip to another switch.

An alternative implemented in the embodiment can be seen on FIG. 14. In the alternative, a user can select whether or not he or she owns his or her traffic, meaning that all his or her traffic will flow through his or her access link device 320, for example. This workaround does not allow dynamically routing traffic of the mobile device 320 to an alternate access link 410, for example, and therefore, limits the use cases described above.

FIG. 14 will now be described.

Note that it is possible that the mobile device 320, for example, acts as a LAN device able to communicate with any other LAN device. In this case, it needs to connect with a Wifi access point where an OpenFlow forwarding element runs.

Also, it is possible that the mobile device 320 acts as a gateway device. In this case, the switch 220 can route traffic to the mobile device 320 in order to send the traffic to the corresponding mobile access link 420 and route the traffic back if it comes from the mobile access link 420.

First lines 1001 in the logs shown in FIG. 14 are to enable both Wifi and 3G running at the same time. This is not an option currently mainly not for draining the battery down. To that end, it is necessary to root the device, install a .ko file and configure a wlanO accordingly (a wpa supplicant and a DHCP client).

The lines 1001 mean as follows:
to stop a DHCP server if a remaining DHCP server still runs;
to disable Wifi;
to enable data 3G/4G;
to install a .ko file;
to set a wlanO up;
to set a wpa supplicant for the wlanO; and
to start a DHCP client with dhcpcd.

The next lines 1002 are IPtable entries, and a sysctl network is to provide the functions above routing traffic coming from LAN devices to a mobile access link and back. Second, local traffic is ensured to flow to a LAN device.

The next lines 1003 mean as follows:
to allow forwarding from this application to the wlanO or a rmnet (which means a mobile interface);
to masquerade an IP address going out to rmnet (this allows sending a packet from any device and be able to retrieve information to send back a packet to it;
to create a table 201 with a default mobile gateway route to the rmnet;
to create a table 200 with a default LAN gateway route for the wlanO;
to add a LAN route to the table 200 for traffic coming from the Internet to any LAN device;
to add a LAN route to the table 201 for LAN traffic;
to add a rule to jump to the table 201 when a packet has a destination in the LAN with pref 42 priority than 43; and
to add a rule to jump to the table 200 otherwise.

In summary, for a packet coming from the switch 220, the packet tries to match a local rule first (e.g., to reach to a mobile device LAN address). Then, an Internet rule goes to the table 200 which applies a default gateway route to the packet.

For a packet coming back from the Internet, it goes to the table 200, and a LAN route is applied thereto to reach a LAN device.

Another option is "Own Traffic" which means that traffic of the mobile device 320 (more specifically, the device function 321), for example, towards the Internet is directly output to the mobile gateway 320 itself (more specifically, the gateway function 323) instead of going to the switch 220. This avoids the traffic to go and back before sending it to the mobile gateway 320 (more specifically, the gateway function 323). On the other hand, traffic of that device 320 cannot be routed to any other gateway 310, for example.

Another way to manage this case is to make the mobile device 320 be an OpenFlow client (see FIG. 13). To that end, the OpenFlow controller 205 directly sets rules to forward the traffic to the mobile gateway 320 (more specifically, the gateway function 323) if the routing algorithm 213 decides to send that traffic in that direction.

The OpenFlow controller 205 can run from anywhere. The virtual gateway application 211 can run outside the LAN network (including the devices 110 and 120, the access link devices 310-330, and the OpenFlow switch 220), for example, on a "cloud". The OpenFlow controller 205 establishes, for example, a SSL link with the switch 220 and prevents malicious control. It is also possible that a plurality of the OpenFlow controllers 205 control the single switch 220 as well. In that case, it is possible that different OpenFlow application layers running on the top of the respective OpenFlow controllers 205 are designed to work together. If two of the OpenFlow controllers 205 work together, a consensus on electing the OpenFlow controller 205 can be implemented. In a basic setup, it is possible that the incoming OpenFlow controller 205 delegates its control to the running one. If a previous access link device hosting the OpenFlow controller 205 is turned off, the remaining OpenFlow controller 205 can take the ownership of the switch 220 again.

According to the embodiment, the virtual gateway application 211 enables a seamless routing feature for a home personal network mainly based on the consumer electronics devices. The virtual gateway application 211 runs on the top of the OpenFlow switch 220 and provides a basic layer for enabling the powerful routing algorithm 213 at home.

For example, the solution according to the embodiment can be used to improve the overall QOE for users on making use of all the network capabilities they have paid for. It improves the global available bandwidth, and better routes traffic according to the gateway capabilities, while routing the traffic according to user defined rules as well.

Thus, the apparatuses adaptively connecting devices in a network with gateways coupled to external networks, the methods of adaptively connecting devices in a network with gateways coupled to external network, the systems in networks, computer program products and non-transitory computer readable media have been described in the specific embodiments. However, the present disclosure is not limited to such specific embodiments, and variations and replacements can be made within the scope of the claimed disclosure.

As will be appreciated by one skilled in the art, aspects of the present principles can be embodied as a system, method or computer readable medium. Accordingly, aspects of the present principles can take the form of an entirely hardware, embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Thus, for example, it will be appreciated by those skilled in the art that the block diagrams presented herein represent conceptual views of illustrative system components and/or circuitry embodying the principles of the disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. An apparatus (20) adaptively connecting devices (110, 120) in a network with gateways (310, 320, 330) coupled to external networks, the apparatus comprising:
switch means (220) for connecting one of the devices with one of the gateways; and
control means (205) for controlling the switch means so as to identify the one of the gateways for the one of the devices by using a routing algorithm, the routing algorithm being dynamically determined based on information of the apparatus or received from the devices or the gateways.

2. The apparatus according to claim 1, wherein
the control means is configured to, in response to a connection request from another of the devices while the one of the devices is being connected with the one of the gateways, determine two of the gateways to be used for the one of the devices and the other of the devices, according to a use situation of the one of the devices, and control the switch means accordingly.

3. The apparatus according to claim 1 or 2, wherein
the information includes at least one of requests of the devices, current capabilities of the respective gateways, current use situations of the devices, and past routing decisions.

4. The apparatus according to claim 3, wherein
the current capabilities of the respective gateways and the current use situations of the devices are those appearing when the apparatus receives a connection request from the one of the devices for one of the external networks.

5. The apparatus according to any one of claims 1 to 4, further comprising:
means for directly connecting the one of the devices to one of the external networks without using the switch means.

6. A method of adaptively connecting devices in a network with gateways coupled to external networks by an apparatus, the method comprising, at the apparatus:
connecting (S110, S120) one of the devices with one of the gateways using switch means; and
controlling (S130) the switch means so as to identify the one of the gateways for the one of the devices by using a routing algorithm, the routing algorithm being dynamically determined based on information of the apparatus or received from the devices or the gateways.

7. The method according to claim 6, further comprising:
in response to a connection request from another of the devices while the one of the devices is being connected with the one of the gateways, determining two of the gateways to be used for the one of the devices and the other of the devices, according to a use situation of the one of the devices, and controlling the switch means accordingly.

8. The method according to claim 6 or 7, wherein
the information includes at least one of requests of the devices, current capabilities of the respective gateways, current use situations of the devices, and past routing decisions.

9. The method according to claim 8, wherein
the current capabilities of the respective gateways and the current use situation of the one of the devices are those appearing when receiving a connection request from the one of the devices for one of the external networks.

10. The method according to any one of claims 6 to 9, further comprising:
directly connecting the one of the devices to one of the external networks without using the switch means.

11. The method according to any one of claims 6 to 10, further comprising:
receiving information from the respective gateways concerning their available bandwidths to be used as the information for controlling the switch means.

12. The method according to claim 11, further comprising:
receiving information from the respective gateways concerning their device types or current network indicators to be used as the information for controlling the switch means.

13. A system in a network, the system comprising:
devices (110, 120);
gateways (310, 320, 330) coupled to external networks; and
an apparatus (20) configured to adaptively connect the devices with the gateways, wherein
the apparatus includes
switch means (220) for connecting one of the devices with one of the gateways, and
control means (205) for controlling the switch means so as to identify the one of the gateways for the one of the devices by using a routing algorithm, the routing algorithm being determined based on information of the apparatus or received from the devices or the gateways.

14. Computer program product downloadable from a communication network and/or recorded on a medium readable by a computer and/or executable by a processor, comprising program code instructions for implementing a method according to at least one of claims 6 to 12.

15. Non-transitory computer-readable medium comprising a computer program product recorded thereon and capable of being run by a processor, including program code instructions for implementing a method according to at least one of claims 6 to 12.
